# EUROPEAN PATENT SPECIFICATION

(11) **EP 2 356 645 B1**
(45) Date of publication and mention of the grant of the patent: **02.01.2013**
(21) Application number: 09804067.8
(22) Date of filing: 11.11.2009
(51) Int. Cl.: G09B 15/00

(54) **MUSICAL INSTRUMENT**
MUSIKINSTRUMENT
INSTRUMENT DE MUSIQUE

(30) Priority: 11.11.2008 IT RA20080046
(43) Date of publication of application: 17.08.2011
(73) Proprietor: Titi, Luciano, 48020 S. Stefano (RA) (IT)
(72) Inventor: CASIRAGHI, Marco, I-23807 Merate (LC) (IT); TITI, Luciano, I-48020 S. Stefano (RA) (IT)
(74) Representative: Roncuzzi, Davide
(86) International application number: PCT/IT2009/000505
(87) International publication number: WO 2010/055537

(56) References cited:
- CN-Y- 2 600 898
- DE-A1- 3 030 999
- DE-U1-202004 005 738
- FR-A- 2 905 788

## Description

The present invention relates to a musical instrument. In particular, the present invention relates to a musical instrument comprising a plurality of members, each of which is shaped so as to be used in succession in order selectively to produce a given sound.

### BACKGROUND TO THE INVENTION

It is well known that a musical instrument is a device suitable to produce sound as a result of the activation of a respective acoustic unit carried out through the interaction of a user with an interface built accordingly, to produce signals of a nature compatible with the type of that acoustic unit. In view of the above description, it is readily apparent that every musical instrument can be subjected to a dual interpretation, i.e. as a device suitable to reproduce a musical piece or as a device able to refine the knowledge of an execution technique, whose effect is to produce music.

In any case, it is well known that learning and refining a methodology of use of a musical instrument requires the ability to interpret graphic signs and the syntactic rules whereby these signs are represented and hence used. It is easy to understand that this ability is normally associated to learning to read and write graphic signs such as the letters of the alphabet and the Arabic digits, and hence to create associations between them to be able to organise them mentally, thereby reading them as names or as numbers. This ability is normally acquired starting from 5 or 6 years of age, and it is readily understood that this custom prevents younger children from exploiting their spontaneous learning abilities to interiorise the musical language, and in particular the concept of rhythm, which consists of the sequence of the different sound events, which in a musical piece tends to be repeated at regular intervals. Therefore, rhythm can be produced as an alternation of a sound and of a pause or as alternation of different sounds and hence it represents one of the results produced using a musical instrument and a basic element, whose poor knowledge prevents from faithfully reproducing a musical piece.

In view of the above description, it is considered normal to start one's practical experiences with a musical instrument only after having acquired knowledge of the musical language, and hence only as a result of a codified curriculum. Therefore, only following a particularly assiduous and interested frequentation of the subject, will an individual of ordinary capabilities be able to develop a personal mode of expression. It is easily understood that this can take place only after many years of individual study and application, so this opportunity is reserved to a small number of professionals of the subject out of the totality of those who approach it as children.

To train the sense of rhythm, didactic methods have been devised, such as the one conceived by Maestro Carl Orff, which is applied through the use of simple percussion instruments, such as the tambourine, the triangle, sonorous wood sticks, rattles, instruments that are able to reproduce a single sound, normally known as Orff teaching instruments. In reality, the use of these instruments enables to reproduce a sound of a defined tonality, so that they will be unsuitable to provide differentiated sound effects, such as to enable the execution of a musical piece and/or learning the sense of rhythm in the most complete sense. In alternative to the single-tone Orff teaching instruments, it is possible to use the music instrument disclosed in patent application FR2905788 that comprises a plurality of percussion elements reciprocally coupled in a modular and compact structure that can be easily handled by a player. Each one of this element is suitable to provide a respective given tone in order to allow an expert music player to execute actual musical pieces. However, the music instrument according to application FR'788 has shown not to be easily useable as a learning instrument by pre-school kids and primary school students. In view of the above description, the problem of having available a musical instrument, which can be used to produce sound and to learn the musical language at pre-school age or by pupils not yet used to reading codes from paper supports or conveyed in any other manner, is currently unsolved, and it represents an interesting challenge for the Applicant.

In view of the situation described above, it would be desirable to have available a musical instrument that, in addition to enabling to limit and possibly to overcome the typical drawbacks of the prior art, illustrated above, enables to propagate knowledge of the bases of the musical language at pre-school age in an implicit manner, through direct practice.

### SUMMARY OF THE PRESENT INVENTION

The present invention relates to a musical instrument. In particular, the present invention relates to a musical instrument comprising a plurality of members, each of which is so shaped as to be usable in succession in order selectively to produce a given sound.

The object of the present invention is to provide a musical instrument, which allows the drawbacks illustrated above to be solved, and which is suitable to satisfy a plurality of requirements that to date have still not been addressed, and therefore suitable to represent a new and original source of economic interest, and capable of modifying the current market of musical instruments.

According to the present invention, a musical instrument is provided, whose main characteristics will be described in at least one of the appended claims.

### BRIEF DESCRIPTION OF DRAWINGS

Additional characteristics and advantages of the musical instrument according to the present invention will be more readily apparent from the description below, set forth with reference to the accompanying drawings, which illustrate at least one non limiting example of embodiment, in which identical or corresponding parts of the instrument are identified by the same reference numbers. In particular:
- - figure 1 shows a schematic perspective view of a first preferred embodiment of the present invention;
   - figure 3 shows a perspective schematic view in enlarged scale of a first member excerpted from figure 1;
   - figure 4 shows a perspective schematic view in enlarged scale of a variant of the first member excerpted from figure 1;
   - figure 5 shows a perspective schematic view in enlarged scale of a second variant of the first member excerpted from figure 1;
   - figure 6 shows a perspective schematic view in enlarged scale of a third variant of the first member excerpted from figure 1;
   - figure 7 shows a side elevation view of two details excerpted from figure 5, mutually coupled in conditions of use; and

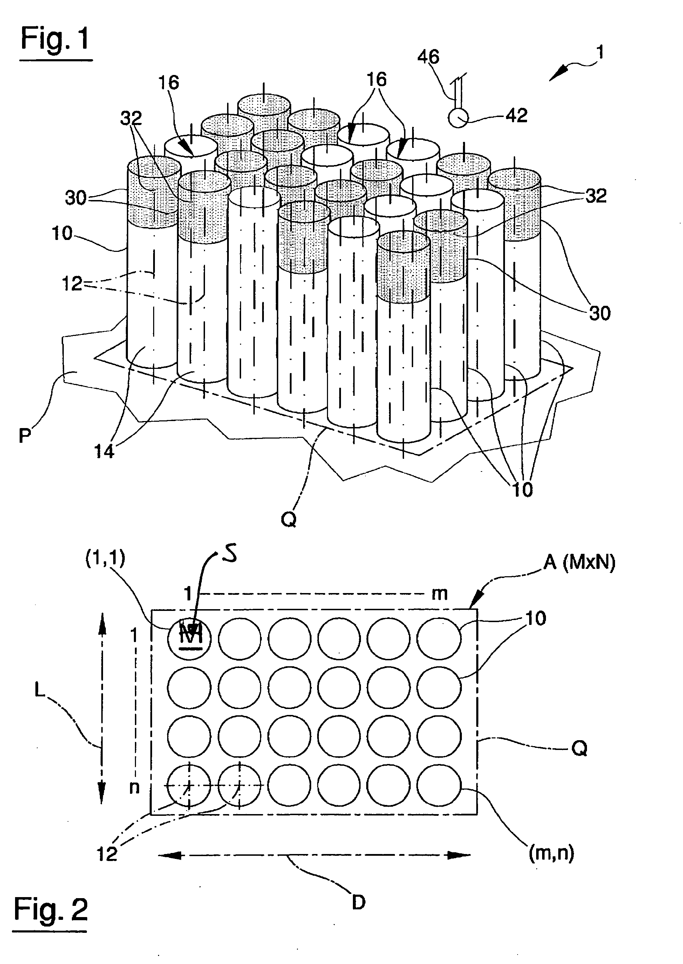

   - figure 2 shows a schematic plan view of figure 1, in reduced scale and with some parts removed for the sake of clarity;

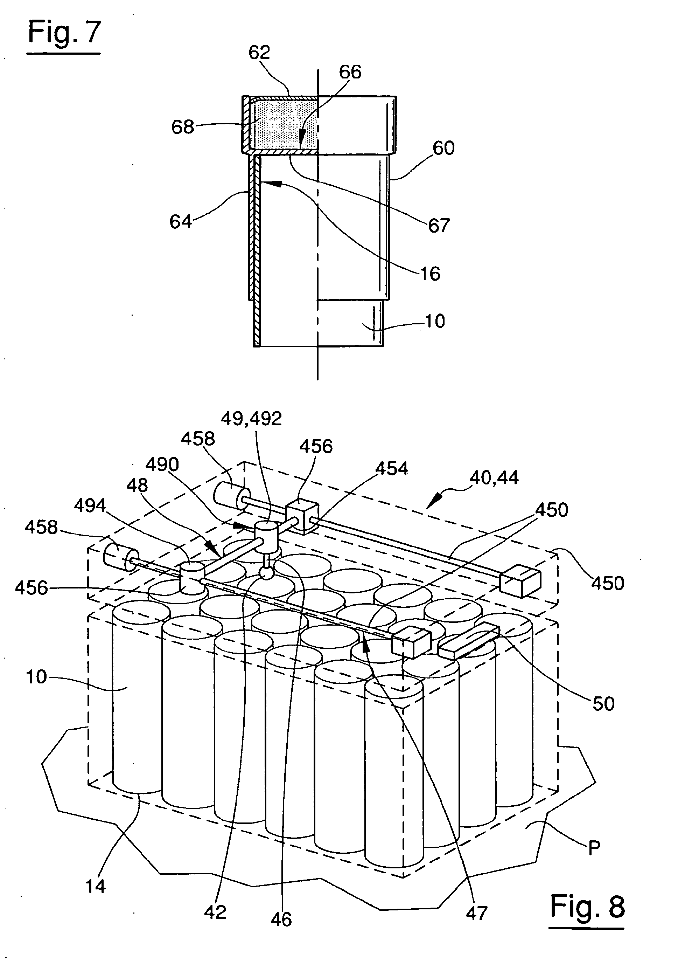

- - figure 8 shows a schematic perspective view of a second preferred embodiment of the present invention.

### DETAILED DESCRIPTION OF THE PRESENT INVENTION

In figure 1, the reference number 1 indicates, in its entirety, a musical instrument validly usable to produce sounds according to given sequences, and therefore to enable the substantially spontaneous assimilation of the concept of rhythm.

With reference to figure 1 again, the instrument 1 comprises a plurality of sonorous members 10 substantially identical to each other, each of which presents a longitudinal axis 12 and is provided with a foot 14 so shaped as to bear on a substantially flat support surface P maintaining the corresponding axis 12 substantially perpendicular to this surface P. To each member 10 is associated an acoustic unit 30 designed so as to make the same member 10 able to produce sound through the use of a percussive element 42, designed so as to interact with each acoustic unit 30 to produce sound through the respective member 10.

Moreover, each member 10 presents an outer contour of the prismatic type, transverse to its own foot 14. Said contour presents a polygonal or circular cross section S; thanks to this conformation, it is possible to position the members 10 on the surface P within a rectangular geometric contour Q, according to a matrix scheme set-up with its own longitudinal axes 12 spaced at fixed pitch along a first given direction D and a second direction L transverse to the first direction D. In this way, it will be possible to produce a structure geometrically similar to an ordered algebraic matrix A presenting a first number M of rows R and a second number N of columns C, and this will enable to organise the acoustic units 30 according to the selected matrix distribution and, therefore, to reproduce an ordered rhythmic sequence of sounds and pauses according to a scheme that can be easily visualised and is therefore intuitively understandable.

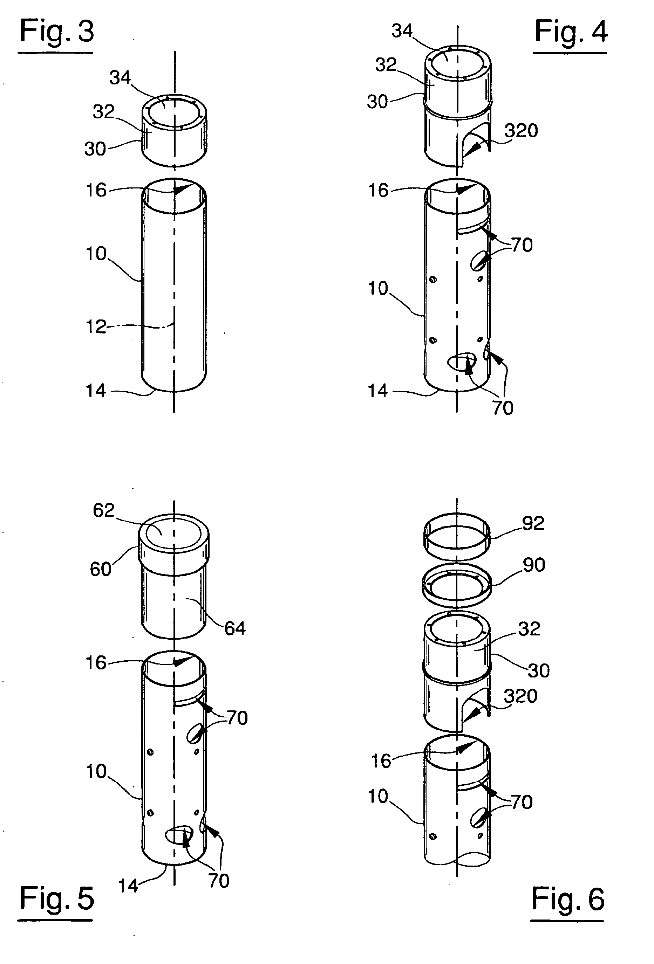

Each member 10 presents constant longitudinal extension and each acoustic unit 30 comprises a lid 32 which, in figure 1 only, is illustrated in a contrasting colour to make it more readily identifiable, and therewith its manner of use. With particular reference to figure 3, each lid 32 is provided with a membrane 34 substantially perpendicular to the axis 12 and able to resonate by percussion. For the sake of convenience, each lid 32 presents given height and a section that is geometrically similar to that of the member 10 and sufficiently wide to be easily coupled and uncoupled to each member 10 to produce a matrix distribution defined by the distribution of the members 10 and of the acoustic units 30. The lid 32 bears the membrane 34 at a height that, with the lid 32 fitted on the respective member 10, is substantially identical to that of a free edge 16 of the members 10 set side by side. Therefore, each lid 32 enables selectively to associate to each member 10 the ability to produce a sound by exercising a percussive action along the respective axis 12. It is readily apparent that the case of the presence of the lid 32 will enable acoustically to detect the presence or the absence of the lid 32 interacting at a height equal to that of the edge 16. According to the accompanying drawings, each sonorous member 10 comprises a cylindrical body 10 so that, for the sake of simplicity the expressions "sonorous member 10" and "member 10" are considered equivalent respectively to the expressions "cylindrical body 10" and "body 10" here and in the following part of this description, without limiting the wideness of the present invention.

It should be noted that if it is desirable to recover the energy delivered for the longitudinal actuation of the percussion element 42, even if the corresponding member 10 should remain substantially mute, it could be convenient to associate to each cylindrical body 10 an element able to serve as an abutment. This requirement could be met by a structure shown in figure 5, in which an abutment member 60, shaped similarly to the lid 32, is fitted on a cylindrical body 10 free from the lid 32, in such a way as to close this cylindrical body 32 from the side opposite to the respective foot 14, similarly to what is provided for the cylindrical bodies 10 closed by the first membrane 34. In this way, a mechanical reaction is provided, that is similar to the reaction offered by the first membrane 34 to an impulsive contact with the percussive element 42. With reference again to figure 4, an abutment member 60 can present a second membrane 62 able to interact with the percussive element 42 in an impulsive manner and to dampen vibrations induced by the percussive element 42, in such a way as to maintain mute the corresponding cylindrical member 10. It should be noted that the first and second membranes 34, 62 associated to the cylindrical bodies 10 are substantially co-planar to each other, in such a way that they can be interfaced with the percussive element 42 at a same height relative to the foot 14 of the cylindrical bodies, or, if preferred, relative to the surface P. This allows always to operate respecting the times defined by a pulsation produced for example with the aid of a metronome, known and therefore not shown, to make substantially identically a time interval necessary to travel through the distance between the percussive element 42 and every second membrane 62, calculated when the percussive element 42 is in the respective raised position, and the time to travel through the distance between the percussive element 42 and every first membrane 34 in the same conditions at the edges, with constant speed of longitudinal actuation of the percussive element 42 for each cylindrical body 10. In this regard, with reference to figure 7, the abutment member 60 must be so constructed that the respective second membrane 62 is maintained at the same height as the first membrane 34 when the lid 32 is installed on the corresponding cylinder 10. With particular reference to figure 6, it should be noted that the abutment member 60 comprises a coupling portion 64, able to fit superiorly in figure 5 the respective cylinder 10, and a hollow portion 66, delimited inferiorly by a bottom 67 and superiorly closed by the second member 62 filled with vibration-damping material 68, such as sponge-rubber or other sound-absorbing material. In view of the above description, each abutment member 60 is acoustically mute, or at least able to produce a sound, whose intensity is lower than the normally audible minimum threshold.

With reference to figures 4 or 5, the musical instrument 1 can comprise a cylindrical body 10 provided with at least one hole 70 obtained in its own lateral shell and shaped to associate a given tonality to the cylindrical body 10. Cylindrical bodies 10 of the same instrument 10 may present holes 70 with shape and dimensions that are substantially identical to each other or with different shapes and dimensions according to the utilisation requirements.

Moreover, again with reference to figure 4, the respective lid 32 can present a transverse opening 320 with given angular amplitude and in such axial position that it can be interfaced to at least one hole 70 in conditions wherein the lid 32 is mounted on the corresponding cylindrical body 10. In this case, the lid 32 must be able to be coupled with clearance to the cylindrical body 10, and hence becomes able to adjust at will a degree of superposition between the hole 70, now considered, and the opening 320. This enables to modulate the tonality associated to the cylindrical body 10 for relative axial rotations of the lid 32 with respect to the corresponding cylindrical body 10. In view of the above description, in the instrument 1 illustrated with reference to figure 4, the lid 32, and in particular the fact that this lid 32 presents the opening 320, defines a modulation unit that may conveniently be indicated with the same reference number 320, in such a way as to be able to emit sounds of different tonality through a same cylindrical body 10. In general, the opening 320 may be shaped as a slit 320 of given angular amplitude, positioned transversely to the respective longitudinal axis 12 in conditions wherein the lid 32 is mounted on the corresponding cylindrical body 10.

According to figure 6, to each cylindrical body 10 can be associated an indicator member 90 of given colour to distinguish chromatically the tonality associated to a determined cylindrical body 10 according to a tone - colour association that can be defined at will. For the sake of convenience, each indicator member 90 can be coupled in a snapping manner to an upper portion of the lid 32 and it can comprise a seat for a ring 92 of a given colour.

The use of the musical instrument 1 described above is readily understandable and requires no further explanation. However, it may be appropriate to specify that, with reference to figure 2, the musical instrument 1 can be easily employed by a user who grips the percussive element 42 and uses it with a pulsation defined by a metronome mentioned above along the longitudinal axis 12 of each member 10 within the rectangular path Q (shown in figure 2) in a cyclical manner according to a substantially Cartesian pattern, hence to travel, in use, through the matrix A in a manner ordered row by row, or column by column, starting from a first member 10 arranged in position 1,1 to a last member 10 arranged in position m, n. In particular, the direction of travel of the various members 10 by the percussive element 42 may be followed in such a way that each row R is travelled in increasing sense starting from column 1 to column N, then moving to the subsequent row, in which the same movement is repeated, or according to a second direction of travel, in which upon reaching each member 10, that delimits a row longitudinally, the subsequent row is travelled, reversing the direction of travel. If it is decided that the percussive element 42 travels through the matrix A of members 10 column by column, the two cases could occur, in which each column C is travelled in increasing sense from the row R in position 1 to the row R in position m, or that upon reaching each member 10 delimiting a column, the direction of travel of each successive column is reversed.

Lastly, it is clear that modifications and variants can be applied to the musical instrument 1 described and illustrated herein, without however departing from the protective scope of the present invention.

It should be specified that to the musical instrument 1 illustrated in figures 1-6 can be associated an operating unit 40, visible in figure 8, comprising an actuation device 44 of the Cartesian type, associated to the percussive element 42 to actuate it as described above. This actuation device comprises a frame 45, shown with dashed lines, that can be installed in a position facing the cylindrical bodies 10 at opposite side to the surface P. This frame 45 supports in a known manner a pair of guides 47 and 48, mutually orthogonal and arranged substantially parallel to the surface P. The guide 47 is parallel to the first direction D and comprises a pair of screws 450 parallel to each other and to the direction D, that are carried in a freely rotatable manner by the frame 45, and the guide 48 comprises a screw 454 parallel to the second direction L, carried by a pair of nut screws 456, each coupled to a respective screw 450. To each screw 450 is associated an actuation device 458 suitable to bring to rotation the respective screw 450 and to actuate the screw 454, so as to move it parallel to the direction D. The guide 48, moreover, supports, perpendicularly to the plane P, in a known manner, a linear actuator 49, to activate it along the direction L by means of a screw-nut screw coupling 490, with a case 492 of the actuator 49 coupled in a rotatable manner to the screw 454 and the use of an actuator 494 carried by one of the nut screws 456. This actuator 49 comprises a stem 46 oriented transversely to the surface P and delimited at the side of the surface P by the percussive element 42. In view of the above description, the actuation device 44 is suitable to move the actuator 49 parallel to the surface P, so as to make the percussive element 42 face in succession each cylindrical body 10 and then to move it with impulsive motion from and to a raised position from the surface P at a given height, greater than the extension of the cylindrical body 10, passing through a lowered position, in which the percussive element 42 is arranged at a smaller distance from the surface P than an axial extension of the cylindrical bodies 10. Therefore, the actuation device 44 is able to produce silence or sound according to the matrix distribution of each acoustic unit 30 in combination with the cylindrical bodies 10.

The operating unit 40, moreover, integrates a control device 50, on which it is possible to set a substantially constant pulsation, similarly to a frequency generator, in order to constrain the operating unit 40 to move its percussive element 42 in a Cartesian manner, to align it in succession along the axis of each member 10, according to a pattern that can be defined at will, and to actuate this percussive element 42 axially up to a sufficient height to interact with the membranes 34 selectively associated to some of the members 10. This enables to produce a rhythmic sequence of sounds and pauses, separated by substantially constant intervals according to the matrix distribution of the lids 32. In view of the above description, it should be specified that each member 10 can be obtained through a cylindrical body 10 with given longitudinal extension and radius. Naturally, the actuation device 44 and the control device 50 are mutually connected, so as to enable the activation of the actuator 49 and the respective percussive element 42, to allow this percussive element 42 to interact with each cylindrical body 10 of the instrument 1 in a matrix manner as described above. To simplify figure 7, and without making its comprehension any less clear, the electrical connections between the control device 50 and the actuators 458, 494 and 492 are not shown, as they are of an absolutely known and ordinary kind.

The use of the version of the musical instrument 1 of figure 7 is readily understandable and requires no further explanation. In any case, it may be appropriate to specify that the actuation device 44 is able to sweep with stops the area overlying each row R of cylindrical body 10 with the percussive element 42 and to lower and raise the percussive element 42 impulsively starting from a cylindrical body 10 that can be located in a given Cartesian manner. For example, and without compromising the general nature of the description, the actuation device 44 could proceed starting from the cylindrical body 10 with matrix position (1,1), where the first term of the pair indicates the number of a row and the second term indicates the number of a column according to a matrix notation, continuing the pulsating activation defined by the control device 50 until exhausting the number of columns of the respective row, and then to the cylindrical body 10 with matrix position (1, N), then to increase by 1 the number of the row and repeat the type of motion described above until exhausting the number of the rows and complete the cycle with the cylindrical body (row M, column N), possibly then repeating the sequence in such a way as to produce a given rhythmic sequence according to the cadenced alternation of sound and of silence. It is readily apparent that the actuation device 44 could be replaced by the arm of a user who, having interiorised a given pulsation, which may have been given through the use of a metronome, known and therefore not illustrated, could easily replicate the rhythmic sequence extemporaneously projected on the planer surface P through a given number of cylindrical bodies 10, some of which are selectively provided with a lid 32 as described above, hence according to a distribution defined in a more or less random manner, also for the sole purpose of trying a different rhythm from those already experimented.

In view of the above description, even a person completely lacking in musical knowledge, but capable of following his/her own internal frequency, given by his/her heart, could replicate a rhythmic sequence created extemporaneously simply after having positioned a number NxM of cylindrical bodies 10 on the surface and having closed a part thereof by using a given number of lids 32.

## Claims

1. A musical instrument comprising a plurality of sonorous members (10), each of which is provided with a foot (14) so shaped as to bear on a substantially flat surface (P); acoustic means (30) being provided in association with at least one said member (10) to make it able to produce sound employing an operative element (42) suitable to interact with each said acoustic means (30); each said member (10) presenting an outer contour provided with a given cross section (S) so as it can be positioned on said surface (P) along a given first direction (D) and along a second direction (L); **characterised in that** said second direction (L) is transverse to said first direction (D) in order to produce a structure that is geometrically similar to an ordered algebraic matrix (A) presenting a first number (M) of lines (R) and a second number (N) of columns (C), in order to organise said acoustic means (30) according to a matrix distribution and reproduce an orderly rhythmic sequence of sounds and pauses.

2. An instrument according to claim 1, **characterised in that** said acoustic means (30) are removable and able to be selectively associated to each said member (10) to produce a matrix distribution that can be defined at will.

3. An instrument according to any one of the previous claims, **characterised in that** each said member (10) comprises a substantially hollow cylindrical body (10) presenting a respective longitudinal axis (12); said foot (14) being arranged to maintain its respective said longitudinal axis (14) substantially orthogonal to said surface (P).

4. An instrument according to claim 3, **characterised in that** said acoustic means (30) comprise a lid (32) provided with a first membrane (34) able to produce sound by vibration if hit through said operative element (42).

5. An instrument according to any one of the previous claims, **characterised in that** it comprises at least one abutment member (60) shaped similarly to said lid (32) to be associated selectively to each said cylindrical body (10) in such a way as to close it at the opposite side to the respective said foot (14) in a similar manner to said first membrane (34); said abutment member (60) being shaped to provide a mechanical reaction similar to a reaction offered by said first membrane (34) to an impulsive contact with said operative element (42), and being able to produce a sound of lower intensity than the normally audible minimum threshold.

6. An instrument according to claim 5, **characterised in that** said abutment member (60) comprises an engagement portion (64) suitable to fit the respective said cylinder (10), a hollow portion (66) delimited by a bottom (67) and closed by the second membrane (62) filled with material (68) able to dampen sound vibrations, so that said abutment member (60) is acoustically mute or able to produce a sound with lower intensity than the normally audible minimum threshold.

7. An instrument according to claim 6, **characterised in that** each said abutment member (60) presents a second membrane (62) able to interact with said operative element (42) in an impulsive manner and to dampen vibrations induced by said percussive element (42) so as to maintain mute the corresponding said cylindrical element (10).

8. An instrument according to any one of claims 3-7, **characterised in that** at least one said cylindrical body (10) presents at least one lateral hole (70) shaped to associate a given tonality to said cylindrical body.

9. An instrument according to any one of claims 3-8, **characterised in that** it comprises modulation means (320) for modulating a sound that can be emitted through a same cylindrical body (10).

10. An instrument according to any one of claims 4-9, **characterised in that** said lid (32) is dimensioned to fit with clearance each said cylindrical body (10) so as to be freely rotatable around said longitudinal axis (12); said modulation means (320) comprising a transverse aperture (320) of given angular width obtained in said lid (32) and substantially identical to the corresponding said hole (70) and obtained in said lid (32) in such position as to be interfaceable to said hole (70) in order to adjust at will a degree of superposition of said hole (70) and of said aperture (320) and to allow to modulate said given tonality associated to said cylindrical body (10) as a result of relative axial rotations of said lid (32) with respect to the corresponding said cylindrical body (10).

11. An instrument according to claim 10, **characterised in that** said aperture (320) comprises a slit (320) positioned transversely to the respective said longitudinal axis (12) when the lid (32) is mounted on the corresponding cylindrical body (10).

12. An instrument according to claim 11, **characterised in that** to each cylindrical body (10) can be associated an indicator member (90) of given colour to distinguish chromatically the tonality associated to said cylindrical body (10) according to a tone colour association that can be determined at will.

13. An instrument according to claim 12, **characterised in that** said indicator member (90) can be coupled in a snapping manner to an upper portion of said lid (32) and it can comprise a ring (92) of a given colour.

14. An instrument according to any one of the previous claims, **characterised by** comprising operative means (40) comprising said operative element (42) and designed so as to guide said operative element (42) to travel, in use, through said matrix (A) cyclically in Cartesian manner.

15. An instrument according to claim 14, **characterised in that** said operative means (40) are adapted to travel, in use, through said matrix (A) in an orderly manner line by line starting from a first said cylindrical body (10) located in position (1,1) to a last said cylindrical body (10) located in position (m, n) or (m, 1), based on a first direction of travel in which said lines (R) are travelled in succession in a given direction, definable at will, starting from said column (C) identified as column 1 or from said column (C) identifiable as column N, or based on a second direction of travel in which when each cylindrical body (10) that delimits a said line (R) is reached, the direction of travel of each said successive line (R) is inverted.

16. An instrument according to claim 14, **characterised in that** said operative means (40) are arranged to travel, in use, through said matrix (A) in orderly manner column by column starting from a first said cylindrical body (10) located in position (1,1) to a last said cylindrical body (10) located in position (m, n) or (1, n), based on a third direction of travel in which each said column (C) is travelled in increasing direction from the line (R) in position 1 to the line (R) in position m, or based on a fourth direction of travel in which, at each cylindrical body (10) that delimits a column, the direction of travel of each successive column is inverted.

17. An instrument according to claim 15 or 16, **characterised by** comprising a control unit (50) able to define a substantially constant pulsation; said control unit (50) being connected to said operative means (40) to constrain them to interact, in use, with said acoustic means (30) of each said cylindrical body (10) in cadenced manner according to said pulsation.

18. An instrument according to claim 17, **characterised in that** each said section of each said cylindrical body (10) presents given shape and size, so that said members (10) can be positioned at constant pitch along the respective said lines (R) and the respective said columns (C) of said matrix (A), in such a way as to enable said operative means (30) to reproduce a rhythmic sequence of sounds and pauses distributed in substantially constant manner based on said matrix distribution of said acoustic means (30) associated to said members (10) and on a substantially constant speed of interaction with said acoustic means (30) associated to said members (10).

19. An instrument according to claim 18, **characterised in that** said operative means (40) comprise an actuating device (44) of a Cartesian type for activating said percussive element (42); said first membrane (34) being substantially parallel to said surface (P).

20. An instrument according to claim 19, **characterised in that** said actuating device (44) comprises a rod (46) supporting said percussive element (42) and carried movable parallel to said surface (P) to bring said percussive element (P) to face in succession each said cylindrical body (10) in a plane that is substantially transverse to said surface (P) between a raised position and a position of interference with said cylindrical body (10) to reproduce a pause or to set in vibration a said first membrane (34) in such a way as to produce silence or sound based on said matrix distribution of said acoustic means (30).

21. An instrument according to claim 20, **characterised in that** said first and second membranes (34) (60) associated to said cylindrical bodies (10) are substantially coplanar to each other, so as to be interfaceable to said operative element (42) at a same height relative to said surface (P) and to make substantially identical a time to travel said distance between said operative element (42) and said second membrane (62) and a time to travel said distance between said operative element (42) and said first membrane (34), for longitudinal rates of operation of said operative element (42) substantially identical for each said cylindrical body (10).

## Patentansprüche

1. Ein musikalisches Instrument, umfassend ein Vielzahl von klingenden Elementen (10), von denen jedes mit einem Fuß (14) versehen ist, der so gestaltet ist, um eine im Wesentlichen flache Oberfläche (P) hervorzubringen; akustische Mittel (30) sind vorgesehen, die mit zumindest einem der Elemente (10) verbunden sind, um es zu ermöglichen, dass Klang erzeugt wird, unter Benutzung eines Betätigungselements (42), welches geeignet ist, mit jedem der akustischen Mittel (30) zusammenzuwirken; jedes der Mittel (10) stellt eine äußere Kontur bereit, die mit einem vorgegebenen Querschnitt (S) versehen ist, so dass es auf der Oberfläche (P) entlang einer vorgegebenen ersten Richtung (D) und entlang einer zweiten Richtung (L) positioniert werden kann;
**dadurch gekennzeichnet,**
**dass** die zweite Richtung (L) querverlaufend zur ersten Richtung (D) ist, um eine Struktur zu erzeugen, die gleichartig ist zu einer geordneten algebraischen Matrix (A), die eine erste Anzahl (M) von Linien (R) und eine zweite Anzahl (N) von Spalten (C) bereitstellt, um die akustischen Mittel (30) entsprechend einer Matrixverteilung zu organisieren und um eine systematische rhythmische Sequenz von Klängen und Pausen zu reproduzieren.

2. Ein Instrument nach Anspruch 1,
**dadurch gekennzeichnet,**
**dass** die akustischen Mittel (30) abnehmbar sind und in der geeignet sind, selektiv mit jedem der Elemente (10) verbunden zu werden, um eine Matrixverteilung zu erzeugen, die nach Belieben definiert werden kann.

3. Ein Instrument nach einem der vorherigen Ansprüche,
**dadurch gekennzeichnet,**
**dass** jedes der Elemente (10) einen im Wesentlichen hohlen zylindrischen Körper (10) umfasst, der eine entsprechende Längsachse (12) bereitstellt; der Fuß (14) ist ausgerichtet, um dessen zugehörige Achse (14) im Wesentlichen senkrecht zur Oberfläche (P) zu halten.

4. Ein Instrument nach Anspruch 3,
**dadurch gekennzeichnet,**
**dass** die akustischen Mittel (30) einen Deckel (32) umfassen, der mit einer ersten Membran (34) versehen ist, welche geeignet ist, einen Klang zu erzeugen durch Vibration, wenn durch das Betätigungselement (42) getroffen.

5. Ein Instrument nach einem der vorherigen Ansprüche,
**dadurch gekennzeichnet,**
**dass** es zumindest ein Stützelement (60) umfasst, welches gleichartig zu dem Deckel (32) geformt ist, um selektiv mit jedem der zylindrischen Körper (10) derart verbunden zu werden, dass es die dem zugehörigen Fuß (14) entgegengesetzte Seite in einer der ersten Membran (34) gleichartigen Weise verschließt; das Stützelement (60) ist geformt, um auf einen impulsiven Kontakt mit dem Betätigungselement (42) eine mechanische Reaktion bereitzustellen, die gleichartig ist zu einer Reaktion, die angeboten wird durch die erste Membran (34), und die geeignet ist, einen Klang von geringerer Intensität als den normal hörbaren minimalen Grenzwert zu erzeugen.

6. Ein Instrument nach Anspruch 5,
**dadurch gekennzeichnet,**
**dass** das Stützelement (60) einen ersten Eingriffsabschnitt (64), der der geeignet ist, mit dem zugehörigen Zylinder (10) zusammenzupassen, und einen durch einen Boden (67) begrenzten hohlen Abschnitt (66) umfasst und verschlossen ist durch die zweite Membran (62) und mit Material (68) gefüllt ist, welches geeignet ist, die Klangvibrationen zu dämpfen, so dass das Stützelement (60) akustisch stumm ist oder geeignet ist, einen Klang von geringerer Intensität als den normal hörbaren minimalen Grenzwert zu erzeugen.

7. Ein Instrument nach Anspruch 6,
**dadurch gekennzeichnet,**
**dass** jedes Stützelement (60) eine zweite Membran (62) bereitstellt, die geeignet ist, mit dem Betätigungselement (42) in einer impulsiven Art zusammenzuwirken und die durch das schlagende Element (42) hervorgerufene Vibrationen zu dämpfen, um das zugehörige zylindrische Element (10) stumm zu halten.

8. Ein Instrument nach einem der Ansprüche 3-7,
**dadurch gekennzeichnet,**
**dass** zumindest einer der zylindrischen Körper (10) zumindest ein seitliches Loch (70) bereitstellt, welches so geformt ist, um dem zylindrischen Körper eine vorgegebene Tonalität zuzuweisen.

9. Ein Instrument nach einem der Ansprüche 3-8,
**dadurch gekennzeichnet,**
**dass** es Modulationsmittel (320) zum Modulieren eines Klanges, der durch den selben zylindrischen Körper (10) ausgeben werden kann, umfasst,

10. Ein Instrument nach einem der Ansprüche 4-9,
**dadurch gekennzeichnet,**
**dass** der Deckel (32) dimensioniert ist, um mit Spiel mit jedem der zylindrischen Körper (10) zusammenzupassen, um frei drehbar um die Längsachse (12) zu sein; die Modulationsmittel (320) umfassen eine in dem Deckel gehaltene (32) transversale Öffnung (320) mit einer vorgegebenen winkligen Breite und die im Wesentlichen identisch ist zu dem Loch (70) und die in einer derartigen Position in dem Deckel (32) gehalten ist, um ankoppelbar zu sein mit dem Loch (70), um nach Belieben einen Grad der Überlagerung des Lochs (70) und der Öffnung (320) einzustellen und um ein Modulieren der mit dem zylindrischen Körper (10) vorgegebenen Tonalität zu erlauben, die das Ergebnis ist einer relativen axialen Drehung des Deckels (32) in Bezug auf den zugehörigen zylindrischen Körper (10).

11. Ein Instrument nach Anspruch 10,
**dadurch gekennzeichnet,**
**dass** die Öffnung (320) einen Schlitz (320) umfasst, der transversal zu der zugehörigen Längsachse (12) positioniert ist, wenn der Deckel (32) auf dem zugehörigen zylindrischen Körper (10) befestigt ist.

12. Ein Instrument nach Anspruch 11,
**dadurch gekennzeichnet,**
**dass** jedem der zylindrischen Körper (10) ein Indikatormittel (90) mit einer vorgegeben Farbe zugewiesen werden kann, um chromatisch die mit dem zylindrischen Körpern (10) verknüpfte Tonalität entsprechend einer Farbtonzuweisung, die nach Belieben festgelegt werden kann, zu unterscheiden.

13. Ein Instrument nach Anspruch 12,
**dadurch gekennzeichnet,**
**dass** das Indikatormittel (90) an einem oberen Abschnitt des Deckels (32) schnappartig befestigt werden kann und dass es einen Ring (92) in einer vorgegebenen Farbe umfassen kann.

14. Ein Instrument nach einem der vorherigen Ansprüche,
**dadurch gekennzeichnet,**
**dass** es Betätigungsmittel (40) umfasst, die das Betätigungselement (42) umfassen, und die so ausgebildet sind, um das Betätigungselement (42) zu führen, um während der Betätigung die Matrix (A) zyklisch in einer kartesischen Art zu durchlaufen.

15. Ein Instrument nach Anspruch 14,
**dadurch gekennzeichnet,**
**dass** die Betätigungsmittel (40) angepasst sind, um im Betrieb die Matrix (A) in einer geordneten Art Linie für Linie zu durchlaufen, angefangen bei einem ersten der zylindrischen Körper (10), der in der Position (1, 1) angeordnet ist, zu einem letzten der zylindrischen Körper (10), der in einer Position (m, n) oder (m, 1) angeordnet ist, basierend auf einer ersten Laufrichtung, in der die Linien (R) in Abfolge in einer vorgegebenen, nach Belieben definierbaren Richtung durchlaufen werden, angefangen von der Spalte (C), identifizierbar als Spalte 1, oder angefangen bei Spalte (C), identifizierbar als Spalte N, oder basierend auf einer zweiten Laufrichtung, in der die Laufrichtung von jeder nachfolgenden Linie (R) umgekehrt wird, sobald jeder zylindrische Körper (10), der eine Linie (R) begrenzt, erreicht wird.

16. Ein Instrument nach Anspruch 14,
**dadurch gekennzeichnet,**
**dass** die Betätigungsmittel (40) angeordnet sind, um im Betrieb die Matrix (A) in einer geordneten Art Spalte für Spalte zu durchlaufen, angefangen bei einem ersten der zylindrischen Körper (10), der in Position (1, 1) angeordnet ist, zu einem letzten der zylindrischen Körper (10), der in Position (m, n) oder (1, n) angeordnet ist, basierend auf einer dritten Laufrichtung, in der jede Spalte (C) in aufsteigender Richtung von der Linie (R) in Position 1 zur Linie (R) in Position m durchlaufen wird, oder basierend auf einer vierten Laufrichtung, in der an jedem zylindrischen Körper (10), der eine Spalte begrenzt, die Laufrichtung von jeder folgenden Spalte umgekehrt wird.

17. Ein Instrument nach Anspruch 15 oder 16,
**dadurch gekennzeichnet,**
**dass** es eine Kontrolleinheit (50) umfasst, die geeignet ist, eine im Wesentlichen konstante Pulsation zu definieren; die Kontrolleinheit (50) ist verbunden mit den Betätigungsmitteln (40), um diese zu beschränken, im Betrieb mit den akustischen Mitteln (30) von jedem der zylindrischen Körper (10) in einer rhythmischen Art entsprechend der Pulsation zu interagieren.

18. Ein Instrument nach Anspruch 17,
**dadurch gekennzeichnet,**
**dass** jeder Bereich der zylindrischen Körper (10) eine vorgegebene Form und Größe darstellt, so dass die Elemente (10) in einem konstanten Abstand entlang der zugehörigen Linien (R) und der zugehörigen Spalten (C) der Matrix (A) positioniert werden können, so dass es den Betätigungsmitteln (30) ermöglicht ist, eine rhythmische Sequenz von Klängen und Pausen in einer im Wesentlichen konstanten Art zu reproduzieren, basierend auf der Matrixverteilung der den Elementen (10) zugeordneten akustischen Mitteln (30) und mit einer im Wesentlichen konstanten Geschwindigkeit der Interaktion mit den den Elementen (10) zugeordneten akustischen Mitteln (30).

19. Ein Instrument nach Anspruch 18,
**dadurch gekennzeichnet,**
**dass** die Betätigungsmittel (40) eine Aktuierungseinrichtung (44) vom kartesischen Typ umfassen, zum Aktivieren des schlagenden Elements (42); die erste Membran (34) ist im Wesentlichen parallel zur Oberfläche (P).

20. Ein Instrument nach Anspruch 19,
**dadurch gekennzeichnet,**
**dass** die Aktuierungseinrichtung (44) einen Stab (46) umfasst, der das schlagende Element (42) unterstützt und der parallel zur Oberfläche (P) beweglich getragen ist, um das schlagende Element (P) aufeinanderfolgend in Gegenüberstellung mit jedem der zylindrischen Körper (10) in einer Ebene zu bringen, die im Wesentliche quer ist zur Oberfläche (P), zwischen einer erhöhten Position und einer Position der Berührung mit dem zylindrischen Körper (10), um eine Pause zu reproduzieren oder um eine erste Membran (34) derart in Vibration zu setzen, um Stille oder Klang zu erzeugen, basierend auf der Matrixverteilung der akustischen Mittel (30).

21. Ein Instrument nach Anspruch 20,
**dadurch gekennzeichnet,**
**dass** die mit den zylindrischen Körpern (10) verknüpften ersten und zweiten Membranen (34) (60) im Wesentlichen koplanar zueinander sind, um koppelbar zu sein mit dem Betätigungselement (42) auf der selben Höhe relativ zur Oberfläche (P) und um im Wesentlichen eine Laufzeit für die Distanz zwischen dem Betätigungselement (42) und der zweiten Membran (62) und eine Laufzeit zwischen dem Betätigungselement (42) und der ersten Membran (34) aneinander anzugleichen, für im Wesentlichen identische Längenverhältnisse der Betätigung des Betätigungselements (42) für jeden zylindrischen Körper (10).

## Revendications

1. Instrument de musique comprenant une pluralité d'éléments sonores (10) dont chacun comporte un pied (14) configuré de façon à porter sur une surface sensiblement plate (P) ; des moyens acoustiques (30) étant disposés en association avec au moins un élément précité (10) pour le rendre apte à produire un son en employant un élément fonctionnel (42) approprié pour interagir avec chaque moyen acoustique précité (30) ; chaque élément précité (10) présentant un contour externe comportant une section transversale donnée (S) de telle sorte qu'il peut être positionné sur ladite surface (P) le long d'une première direction donnée (D) et le long d'une seconde direction (L) ; **caractérisé par le fait que** ladite seconde direction (L) est transversale à ladite première direction (D) de façon à produire une structure qui est géométriquement similaire à une matrice algébrique ordonnée (A) présentant un premier nombre (M) de lignes (R) et un second nombre (N) de colonnes (C), de façon à organiser lesdits moyens acoustiques (30) conformément à une distribution matricielle et à reproduire une séquence rythmique ordonnée de sons et de pauses.

2. Instrument selon la revendication 1, **caractérisé par le fait que** lesdits moyens acoustiques (30) sont amovibles et aptes à être associés de manière sélective à chaque élément précité (10) pour produire une distribution matricielle qui peut être définie à volonté.

3. Instrument selon l'une quelconque des revendications précédentes, **caractérisé par le fait que** chaque élément précité (10) comprend un corps cylindrique sensiblement creux (10) présentant un axe longitudinal respectif (12), ledit pied (14) étant disposé pour maintenir son axe longitudinal précité respectif (14) sensiblement orthogonal à ladite surface (P).

4. Instrument selon la revendication 3, **caractérisé par le fait que** lesdits moyens acoustiques (30) comprennent un couvercle (32) comportant une première membrane (34) apte à produire un son par vibration si elle est frappée par l'intermédiaire dudit élément fonctionnel (42).

5. Instrument selon l'une quelconque des revendications précédentes, **caractérisé par le fait qu'**il comprend au moins un élément de butée (60) configuré de manière similaire audit couvercle (32) pour être associé de manière sélective à chaque corps cylindrique précité(10) de façon à le fermer sur le côté opposé audit pied respectif (14) d'une manière similaire à ladite première membrane (34), ledit élément de butée (60) étant configuré pour fournir une réaction mécanique similaire à une réaction offerte par ladite première membrane (34) à un contact impulsif avec ledit élément fonctionnel (42), et étant apte à produire un son d'intensité inférieure au seuil minimal normalement audible.

6. Instrument selon la revendication 5, **caractérisé par le fait que** ledit élément de butée (60) comprend une partie d'engagement (64) appropriée pour s'adapter audit cylindre respectif (10), une partie creuse (66) délimitée par un fond (67) et fermée par la seconde membrane (62) remplie d'un matériau (68) apte à amortir les vibrations sonores, de telle sorte que ledit élément de butée (60) est acoustiquement muet ou apte à produire un son ayant une intensité inférieure au seuil minimal normalement audible.

7. Instrument selon la revendication 6, **caractérisé par le fait que** chaque élément de butée précité (60) présente une seconde membrane (62) apte à interagir avec ledit élément fonctionnel (42) d'une manière impulsive et à amortir des vibrations induites par ledit élément à percussion (42) de façon à maintenir muet ledit élément cylindrique correspondant (10).

8. Instrument selon l'une quelconque des revendications 3 à 7, **caractérisé par le fait qu'**au moins un corps cylindrique précité (10) présente au moins un trou latéral (70) configuré pour associer une tonalité donnée audit corps cylindrique.

9. Instrument selon l'une quelconque des revendications 3 à 8, **caractérisé par le fait qu'**il comprend des moyens de modulation (320) pour moduler un son qui peut être émis à travers un même corps cylindrique (10).

10. Instrument selon l'une quelconque des revendications 4 à 9, **caractérisé par le fait que** ledit couvercle (32) est dimensionné pour s'adapter avec jeu sur chaque corps cylindrique précité (10) de façon à pouvoir tourner librement autour dudit axe longitudinal (12) ; lesdits moyens de modulation (320) comprenant une ouverture transversale (320) d'une largeur angulaire donnée obtenue dans ledit couvercle (32) et sensiblement identique audit trou correspondant (70) et obtenue dans ledit couvercle (32) dans une position de façon à pouvoir servir d'interface avec ledit trou (70) afin d'ajuster à volonté un degré de superposition dudit trou (70) et de ladite ouverture (320) et permettre de moduler ladite tonalité donnée associée audit corps cylindrique (10) par suite de rotations axiales relatives dudit couvercle (32) par rapport audit corps cylindrique correspondant (10).

11. Instrument selon la revendication 10, **caractérisé par le fait que** ladite ouverture (320) comprend une fente (320) positionnée transversalement audit axe longitudinal respectif (12) lorsque le couvercle (32) est monté sur le corps cylindrique correspondant (10).

12. Instrument selon la revendication 11, **caractérisé par le fait qu'**à chaque corps cylindrique (10), peut être associé un élément indicateur (90) d'une couleur donnée pour distinguer de manière chromatique la tonalité associée audit corps cylindrique (10) conformément à une association de timbres musicaux qui peut être déterminée à volonté.

13. Instrument selon la revendication 12, **caractérisé par le fait que** ledit élément indicateur (90) peut être couplé par encliquetage à une partie supérieure dudit couvercle (32) et qu'il peut comprendre une bague (92) d'une couleur donnée.

14. Instrument selon l'une quelconque des revendications précédentes, **caractérisé par le fait qu'**il comprend des moyens fonctionnels (40) comprenant ledit élément fonctionnel (42) et conçu de façon à guider ledit élément fonctionnel (42) pour se déplacer, lors de l'utilisation, à travers ladite matrice (A) cycliquement d'une manière cartésienne.

15. Instrument selon la revendication 14, **caractérisé par le fait que** lesdits moyens fonctionnels (40) sont conçus pour se déplacer, lors de l'utilisation, à travers ladite matrice (A) d'une manière ordonnée, ligne par ligne, en partant d'un premier corps cylindrique précité (10) situé à la position (1, 1) jusqu'à un dernier corps cylindrique précité (10) situé à la position (m, n) ou (m, 1), sur la base d'une première direction de déplacement dans laquelle lesdites lignes (R) sont parcourues successivement dans une direction donnée, pouvant être définie à volonté, en partant de ladite colonne (C) identifiée comme colonne 1 ou de ladite colonne (C) pouvant être identifiée comme colonne N, ou sur la base d'une seconde direction de déplacement dans laquelle, lorsque chaque corps cylindrique (10) qui délimite une ligne précitée (R) est atteint, la direction de déplacement de chaque ligne successive précitée (R) est inversée.

16. Instrument selon la revendication 14, **caractérisé par le fait que** lesdits moyens fonctionnels (40) sont disposés pour se déplacer, lors de l'utilisation, à travers ladite matrice (A) d'une manière ordonnée, colonne par colonne, en partant d'un premier corps cylindrique précité (10) situé à la position (1, 1) jusqu'à un dernier corps cylindrique précité (10) situé à la position (m, n) ou (1, n), sur la base d'une troisième direction de déplacement dans laquelle chaque colonne précitée (C) est parcourue dans une direction croissante de la ligne (R) à la position 1 à la ligne (R) à la position m, ou sur la base d'une quatrième direction de déplacement dans laquelle, à chaque corps cylindrique (10) qui délimite une colonne, la direction de déplacement de chaque colonne successive est inversée.

17. Instrument selon l'une des revendications 15 ou 16, **caractérisé par le fait qu'**il comprend une unité de commande (50) apte à définir une pulsation sensiblement constante ; ladite unité de commande (50) étant reliée auxdits moyens fonctionnels (40) pour les contraindre à interagir, lors de l'utilisation, avec lesdits moyens acoustiques (30) de chaque corps cylindrique précité (10) d'une manière cadencée conformément à ladite pulsation.

18. Instrument selon la revendication 17, **caractérisé par le fait que** chaque section précitée de chaque corps cylindrique précité (10) présente des forme et dimension données, de telle sorte que lesdits éléments (10) peuvent être positionnés à un pas constant le long desdites lignes respectives (R) et desdites colonnes respectives (C) de ladite matrice (A), de façon à permettre auxdits moyens fonctionnels (30) de reproduire une séquence rythmique de sons et de pauses distribués d'une manière sensiblement constante sur la base de ladite distribution matricielle desdits moyens acoustiques (30) associés auxdits éléments (10) et d'une vitesse sensiblement constante d'interaction avec lesdits moyens acoustiques (30) associés auxdits éléments (10).

19. Instrument selon la revendication 18, **caractérisé par le fait que** lesdits moyens fonctionnels (40) comprennent un dispositif d'actionnement (44) d'un type cartésien pour activer ledit élément à percussion (42), ladite première membrane (34) étant sensiblement parallèle à ladite surface (P).

20. Instrument selon la revendication 19, **caractérisé par le fait que** ledit dispositif d'actionnement (44) comprend une tige (46) supportant ledit élément à percussion (42) et porté mobile parallèlement à ladite surface (P) pour amener ledit élément à percussion (P) à être tourné, successivement, vers chaque corps cylindrique précité (10) dans un plan qui est sensiblement transversal à ladite surface (P) entre une position surélevée et une position d'interférence avec ledit corps cylindrique (10) pour reproduire une pause ou pour régler, en vibration, une première membrane précitée (34) de façon à produire un silence ou un son sur la base de ladite distribution matricielle desdits moyens acoustiques (30).

21. Instrument selon la revendication 20, **caractérisé par le fait que** lesdites première et seconde membranes (34) (60) associées auxdits corps cylindriques (10) sont sensiblement coplanaires l'une à l'autre, de façon à être interfaçable avec ledit élément fonctionnel (42) à une même hauteur par rapport à ladite surface (P) et à rendre sensiblement identique un temps pour parcourir ladite distance entre ledit élément fonctionnel (42) et ladite seconde membrane (62) et un temps pour parcourir ladite distance entre ledit élément fonctionnel (42) et ladite première membrane (34), pour des vitesses de fonctionnement longitudinales dudit élément fonctionnel (42) sensiblement identiques pour chaque corps cylindrique précité (10).
